# FASCICULE DE BREVET EUROPEEN

(11) **EP 1 429 601 B1**
(45) Date de publication et mention de la délivrance du brevet: **22.06.2005**
(21) Numéro de dépôt: 02798769.2
(22) Date de dépôt: 17.09.2002
(51) Int. Cl.: A01K 73/06, A01K 91/18

(54) **DISPOSITIF DE HALAGE D'UNE LIGNE DE PECHE**
VORRICHTUNG ZUM EINHOLEN EINER ANGELLEINE
DEVICE FOR HAULING A FISHING LINE

(30) Priorité: 17.09.2001 FR 0111984
(43) Date de publication de la demande: 23.06.2004
(73) Titulaire: Michon, Dominique, 44490 Le Croisic (FR)
(72) Inventeur: Michon, Dominique, 44490 Le Croisic (FR)
(74) Mandataire: Michelet, Alain
(86) Numéro de dépôt international: PCT/FR2002/003173
(87) Numéro de publication internationale: WO 2003/024207

(56) Documents cités:
- FR-A- 2 354 706
- FR-A- 2 527 046
- GB-A- 1 271 711
- US-A- 4 920 680

## Description

La présente invention concerne un dispositif de halage pour ligne de pêche.

Ce dispositif de halage, couramment dénommé vireur, est plus particulièrement adapté au halage de ligne palangre.

Lors du halage de ce type de ligne, on peut observer sur la ligne mère un étirement de 10 à 15 % qui est dû à la tension exercée par le vireur et en particulier par la poulie de halage.

La détente de la ligne s'effectue sur la poulie de halage et provoque une usure ou une déformation rapide de sa surface périphérique. Cette surface est généralement constituée d'un matériau souple du genre caoutchouc.

L'usure de cette surface provoque la formation de sillons qui génèrent de nouvelles contraintes dans la ligne et en particulier des contraintes de vrillage.

Ces contraintes de vrillage rendent plus difficile l'opération de stockage de la ligne.

Des perfectionnements ont déjà été apportés aux vireurs pour améliorer le contact entre la ligne et la poulie de halage. Ces perfectionnements se trouvent notamment dans le document EP-0 176 463, ainsi que dans les documents FR-2 695 115 et 2 724 292.

Ces perfectionnements évitent dans une certaine mesure le glissement de la ligne sur la poulie et l'usure qui peut en découler. Cependant ils ne peuvent atténuer les dégâts causés par la détente de la ligne sur la périphérie de la poulie.

La présente invention propose un perfectionnement à ce type de matériel qui permet de remédier aux inconvénients précités, et d'améliorer la sécurité de l'opérateur pendant cette opération de halage qui est particulièrement délicate en raison notamment du fait qu'elle implique de la part de l'opérateur, une gestion simultanée de plusieurs opérations comme la conduite du bateau, le positionnement de la ligne par rapport au vireur, son rangement et la récupération du poisson sur les avançons.

Le dispositif de halage ou vireur, selon la revendication principale, comporte une poulie motorisée classique, munie d'une garniture périphérique souple par exemple, et il comporte en plus des poulies complémentaires de halage et des moyens d'entraînement desdites poulies complémentaires, l'ensemble desdites poulies étant disposé de façon à agir comme un cabestan sur la ligne, c'est-à-dire que cette dernière s'enroule sur une partie de ces poulies et que la somme de ces enroulements correspond au moins à la circonférence de l'une desdites poulies, et, par ailleurs, lesdits moyens sont tels qu'ils permettent d'adapter la vitesse périphérique de ces poulies complémentaires à la situation de tension.

Toutes ces poulies de halage permettent de réaliser une détente en cascade répartie entre les différentes poulies. Ces poulies ont un rôle qui s'apparente à l'opération qui consiste à « paumoyer » la ligne de pêche à la façon d'un opérateur qui tracte sa ligne manuellement.

L'avantage de la présence de ces poulies complémentaires, en aval ou en amont de la poulie motrice, réside aussi dans le fait qu'elles libèrent totalement l'opérateur de cette opération de paumoyage, lequel peut se consacrer à toutes les autres opérations accompagnant le halage.

Toujours selon l'invention, les moyens d'entraînement des poulies complémentaires de traction, sont constitués de galets associés auxdites poulies et d'une courroie plate entraînée positivement par la poulie motorisée, laquelle courroie plate coopère avec des galets solidaires desdites poulies complémentaires, lesquels galets peuvent comporter une surface périphérique qui offre une capacité de patinage ou de glissement, adaptée aux besoins, et en particulier à l'état de tension au niveau de la ligne de pêche.

Selon une autre disposition de l'invention, au moins la poulie qui est la plus éloignée de la poulie motorisée, est associée à un galet d'entraînement qui lui procure une vitesse périphérique à vide qui est supérieure à la vitesse périphérique de ladite poulie motorisée, laquelle poulie complémentaire possède ainsi, à tout moment, la capacité de maintenir une force de traction sur la ligne et d'absorber le mou éventuel.

Selon une autre disposition de l'invention, le dispositif de halage comporte des moyens complémentaires motorisés ou non qui permettent d'appliquer et de presser la ligne sur au moins la dernière poulie de halage ou paumoyage, lesquels moyens sont constitués d'une roulette ou d'une bande sans fin qui enveloppe partiellement ladite dernière poulie, laquelle bande, si elle est motorisée, peut évoluer avec une vitesse périphérique identique ou légèrement supérieure à la vitesse périphérique de ladite dernière poulie de halage, ce qui permet notamment d'avaler les noeuds et autres sur la ligne de pêche.

Toujours selon l'invention, le dispositif de halage comporte un guide pour la ligne de pêche, lequel guide est disposé autour du rebord périphérique frontal de la première poulie de halage, de façon à assurer le maintien de la ligne mère sur le chemin de halage, lequel guide comporte en plus, une entaille ou encoche centripète qui retient et recentre la ligne par rapport au chemin de halage, lorsque ledit chemin de halage n'est plus dans le prolongement de ladite ligne.

Selon une variante de réalisation, le dispositif de halage comporte, en amont de la poulie de halage, un dispositif faisant office d'amortisseur à la façon d'un scion, pour l'entrée de la ligne, lequel dispositif comprend une poulie amont fixe suivie d'une poulie mobile, laquelle poulie mobile est portée par un bras qui la maintient en position de façon élastique au moyen d'un ressort par exemple, lequel bras est mobile avec une capacité de déplacement qui est limitée au moyen d'une butée. Ce dispositif permet aussi à l'opérateur de surveiller l'entrée de la ligne et sa tension.

Selon une autre disposition de l'invention, le dispositif de halage comporte également un guide servant à écarter les avançons par rapport au différentes poulies, lequel guide est disposé sous et en abord des poulies, évitant toutes remontées intempestives desdits avançons dans lesdites poulies.

Selon une autre disposition de l'invention, le dispositif de halage comprend un bâti compartimenté monobloc sur lequel sont réparties les différentes poulies, lequel bâti comprend en particulier un compartiment pour loger la poulie motorisée et deux compartiments séparés par une cloison, laquelle cloison définit un compartiment arrière en forme de carter pour loger les moyens d'entraînement des poulies complémentaires de halage qui sont en forme de galets, et un compartiment avant ouvert pour le chemin de halage, où se situent lesdites poulies complémentaires de halage, ladite poulie motrice ayant une largeur telle qu'elle se situe en face des deux compartiments, offrant une portion de sa surface périphérique comme chemin de halage de la ligne et une portion pour accueillir la courroie d'entraînement desdites poulies complémentaires.

Toujours selon l'invention, le bâti du dispositif de halage comporte un bossage creux qui est coiffé par la poulie motorisée, laquelle poulie se présente sous la forme d'une cloche, lequel bossage permet de loger et de fixer le moteur d'entraînement de ladite poulie motorisée.

Selon un mode de réalisation de l'invention, le dispositif de halage comporte par exemple au moins quatre poulies complémentaires de halage qui sont réparties sur la cloison du bâti de façon à former un chemin de halage en zigzag avec un coefficient d'enroulement de la ligne sur lesdites poulies qui correspond par exemple à deux fois la circonférence de ces poulies complémentaires.

Toujours selon l'invention, le dispositif de halage comporte des moyens pour appliquer la courroie qui sert notamment à l'entraînement des poulies complémentaires de halage, sur la périphérie de la poulie motorisée afin d'éviter son patinage sur ladite poulie motorisée, lesquels moyens sont en forme de galets montés à la façon d'une chaîne du type chaîne de bicyclette.

L'invention sera encore détaillée à l'aide de la description suivante et des dessins annexés, donnés à titre indicatif, et dans lesquels :
- la figure 1 représente, sous la forme d'un schéma fonctionnel, le dispositif de halage selon l'invention pour un premier mode de réalisation ;
- la figure 2 représente, de la même façon, sous la forme d'un schéma fonctionnel, le dispositif de halage selon l'invention pour une variante de réalisation ;
- la figure 3 illustre, de façon schématique, un mode de réalisation de l'invention vu de face, c'est-à-dire vu du côté du chemin de halage ;
- la figure 4 représente, toujours schématiquement, un autre mode de réalisation du dispositif de halage selon l'invention, vu de face également ;
- la figure 5 représente le bâti du dispositif de halage selon l'invention, vu en perspective, du côté du chemin de halage ;
- la figure 6 représente une vue arrière du dispositif de halage tel que représenté figure 4, montrant notamment, les moyens d'entraînement ;
- la figure 7 représente un galet d'entraînement à faible coefficient d'adhérence ;
- la figure 8 représente un autre type de galet d'entraînement, à coefficient d'adhérence plus important ;
- la figure 9 est une vue schématique en coupe, selon 9-9 de la figure 2 ;
- la figure 10 est une vue de face de la pièce qui sert de guide à la ligne de pêche et qui est associée à la poulie de halage ;
- la figure 11 représente d'une façon plus détaillée, les moyens de tension de la courroie qui entraîne les poulies complémentaires.

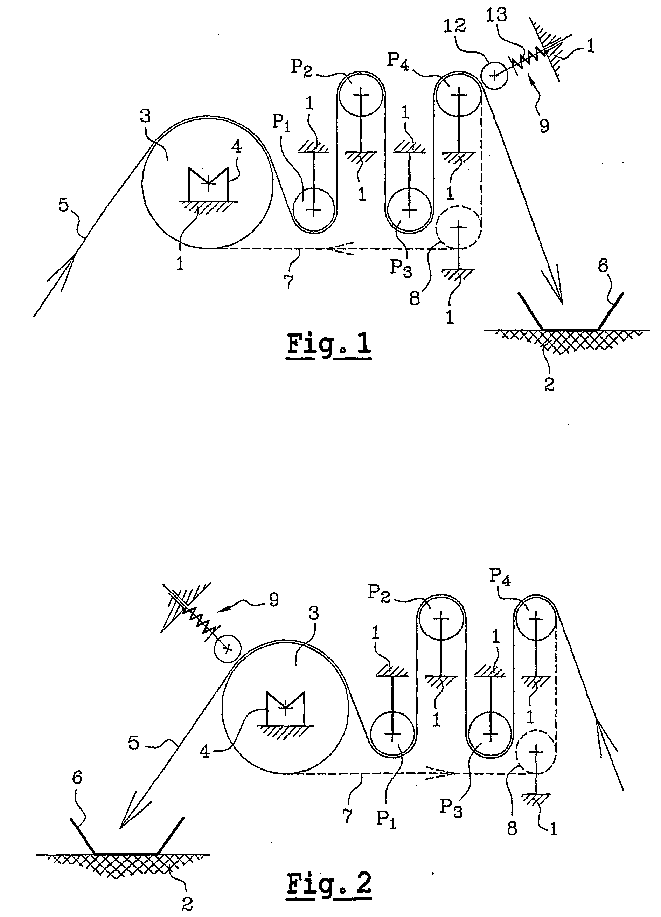

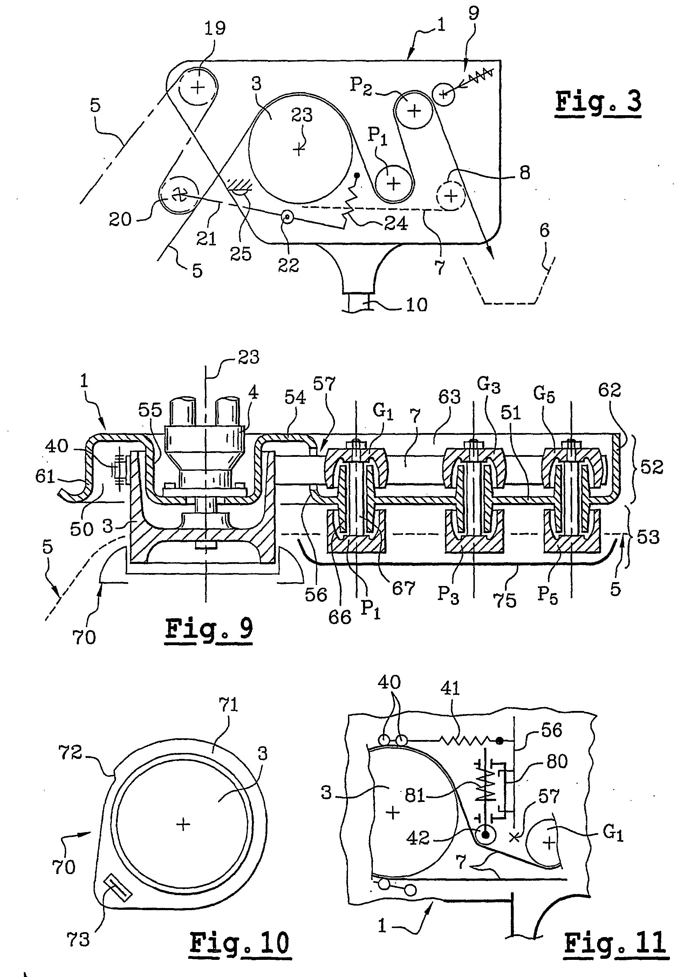

Le dispositif de halage représenté figures 1 et 2 comprend un bâti illustré par le repère 1 ; ce bâti est porté par des moyens appropriés détaillés plus loin, qui sont solidaires du pont 2 du bateau.

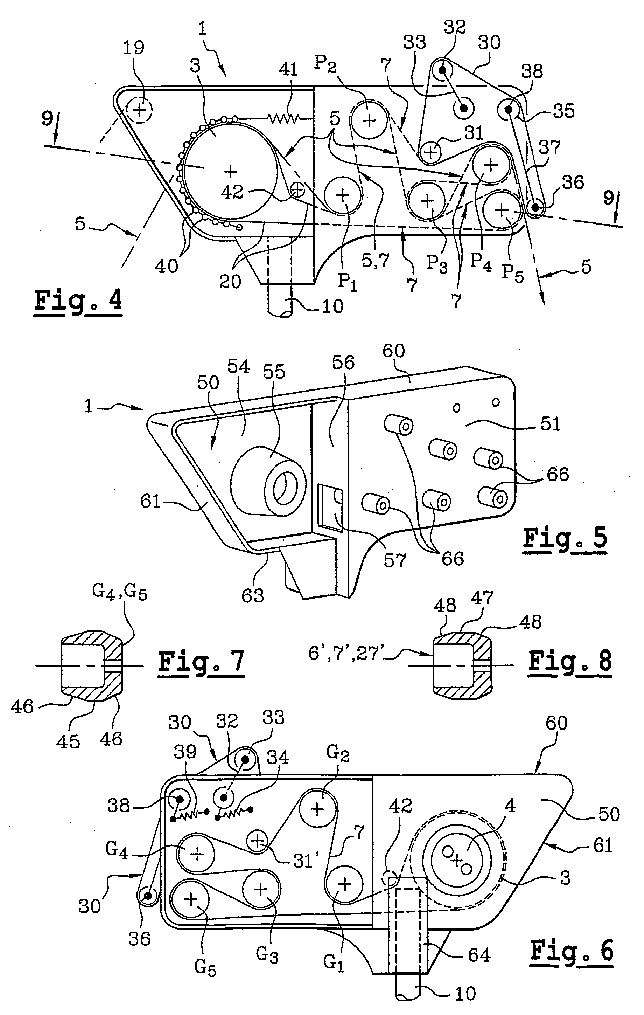

Ce bâti 1 supporte une poulie motorisée 3 qui est entraînée comme représenté et détaillé plus loin figure 7, au moyen d'un moteur hydraulique 4. Cette poulie motorisée 3 peut être dotée sur sa périphérie, d'un revêtement superficiel en matériau du genre caoutchouc. Elle permet de haler la ligne de pêche 5 pour récupérer les poissons (non représentés), laquelle ligne est ensuite rangée de façon appropriée.

On remarque, toujours figure 1, que la ligne 5 s'enroule tout d'abord sur la partie supérieure de la poulie motorisée 3 et ensuite sur des poulies complémentaires de halage P1, P2, P3, P4, avant de rejoindre la caisse de stockage 6 qui est posée sur le pont 2 du bateau.

Ces différentes poulies complémentaires de halage sont entraînées en rotation au moyen d'une courroie 7, qui s'enroule sur la poulie motorisée 3. Cette courroie s'applique sur des galets détaillés plus loin qui sont associés aux différentes poulies complémentaires P1 à P4, et elle passe par une poulie de renvoi 8 qui est solidaire du bâti 1.

Ainsi, la ligne 5 est soumise à une traction à la façon d'un paumoyage, lequel est réalisé par une succession de poulies sur lesquelles elle s'enroule partiellement, l'ensemble de ces poulies agissant à la façon d'un cabestan ; l'enroulement de la ligne 5 sur les différentes poulies, depuis la poulie motorisée 3 jusqu'à la poulie complémentaire P4, est tel que la somme des différentes portions en contact avec ces poulies est au moins égale et nettement supérieure à la circonférence de l'une de ces poulies et en particulier de l'une de ces poulies complémentaires.

Dans le cas de la figure 1, la poulie motorisée 3 constitue la première poulie de halage de la ligne 5 et la poulie P4 constitue la dernière poulie faisant office de paumoyer. Entre les deux, la ligne 5 se détend.

Dans le cas de la figure 2, la poulie motorisée 3 constitue la dernière poulie de halage, alors que la poulie complémentaire P4 constitue la première poulie de halage ou poulie d'entrée.

On retrouve, figure 2, les mêmes éléments que figure 1 c'est-à-dire les poulies complémentaires P1 à P4, la courroie 7 qui sert à l'entraînement de ces poulies avec la poulie ou galet de renvoi 8.

La ligne 5 est stockée de la même façon en sortie de la poulie motorisée 3, dans la caisse de stockage 6.

Dans les deux cas, le dispositif comporte des moyens 9 motorisés ou non qui permettent d'appliquer et de presser la ligne 5 sur la dernière poulie de halage ou paumoyage, c'est-à-dire la poulie complémentaire P 4 dans le cas de la figure 1 et, dans le cas de la figure 2, la poulie motorisée 3.

Dans le cas de la figure 2, au moins une poulie d'entrée de P1 à P4 est entraînée de façon à avoir une vitesse périphérique sensiblement supérieure à la vitesse périphérique de la dernière poulie de paumoyage motorisée 3.

Dans le cas d'un paumoyage par la poulie motorisée 3, les autres poulies en amont qui font office de cabestan peuvent être métalliques, même au niveau de leur surface périphérique, ce qui, d'une part, améliore leur longévité et, d'autre part, permet de relâcher immédiatement l'entraînement lorsque la ligne prend du mou.

La figure 3 représente un mode de réalisation du dispositif de halage, ou vireur, correspondant au mode de réalisation détaillé figure 1, avec un nombre de poulies complémentaires plus réduit.

Ce dispositif de halage représenté figure 3 comprend un bâti 1 qui est monté sur un mât 10, lequel mât est solidaire du pont 2 du bateau non représenté.

Le bâti 1 supporte la poulie motorisée 3 et les poulies complémentaires P1 et P2.

La ligne 5 est pressée sur la poulie P2 au moyen du dispositif 9 constitué d'un galet presseur 12 soumis en permanence à l'action d'un dispositif élastique du genre ressort 13.

Les poulies complémentaires P1 et P2 sont par exemple entraînées par des moyens situés sur la face arrière du bâti 1. On y trouve des galets et la courroie 7, dont une portion apparaît en traits mixtes fins, laquelle courroie 7 est entraînée directement par la poulie motorisée 3 et elle suit, sur une partie de son parcours, le chemin de halage de la ligne 5. Cette courroie 7 s'enroule autour de la poulie motrice 3, puis sous un galet non apparent associé à la poulie complémentaire P1 pour passer ensuite au-dessus d'un autre galet non apparent associé à la poulie complémentaire P2 avant d'atteindre une poulie de renvoi 8 représentée en traits mixtes fins.

Ainsi, la ligne 5 est tractée par la poulie motrice 3 et par les poulies complémentaires motrices P1 et P2. La vitesse périphérique des poulies complémentaires P1 et P2 est égale ou supérieure à celle de la poulie motrice 3 ce qui permet de répartir sur toute la longueur du chemin de halage, les contraintes et en particulier les contraintes de détente au niveau de la ligne 5, lors du halage.

De préférence, les poulies complémentaires P1 et P2 ont une vitesse périphérique qui est, à vide, toujours supérieure à celle de la poulie motrice 3, c'est-à-dire que leur moyen d'entraînement en forme de galet permet un glissement ou patinage de ladite courroie sur la surface périphérique desdits galets.

La ligne de pêche 5 peut également, comme représenté en traits mixtes fins, passer préalablement par un dispositif amortisseur avant d'atteindre la poulie motorisée 3. Ce dispositif amortisseur, valable aussi bien pour le mode de réalisation de la figure 1 que celui de la figure 2, joue un rôle de scion ; il comprend, comme représenté figure 3, appliqué au mode de réalisation de la figure 1, une poulie 19, en amont, montée fixe par rapport au bâti 1, qui reçoit et canalise la ligne de pêche 5, laquelle ligne s'enroule ensuite sur une poulie mobile 20, laquelle poulie 20 est portée par un bras 21 qui est articulé par rapport au bâti 1, au moyen d'un axe 22 qui est parallèle à l'axe 23 de la poulie motrice 3. Ce bras 22 est sollicité en permanence pour tendre la ligne 5, au moyen d'un organe élastique du genre ressort 24, et son mouvement est limité au moyen d'une butée 25 solidaire du bâti 1.

Ce dispositif ou scion, joue un rôle important à l'entrée du vireur. Il renseigne le pêcheur sur les variations de tension dans la ligne et il permet d'une certaine façon, d'absorber le mou dû aux mouvements du navire. Il permet aussi d'amortir les coups de tête ou de queue des poissons.

Les poulies 19 et 20 du dispositif amortisseur, sont des poulies folles.

Les figures suivantes 4, 5, ... etc, illustrent un mode de réalisation de l'invention pour un appareil correspondant au mode de réalisation de la figure 1, transposable au mode de réalisation selon la figure 2, dans lequel le chemin de halage de la ligne 5 est déterminé au moyen de plusieurs poulies complémentaires qui forment un chemin en zigzag. Ainsi des poulies complémentaires motrices sont situées en aval de la poulie 7 à savoir une poulie complémentaire P3, située dans la partie inférieure du bâti, suivie d'un couple de poulies P4 et P5, situé à l'extrémité aval dudit bâti 1. Ce couple P4, P5 peut être réduit comme dans le cas de la figure 1 à une seule poulie P4 et dans le cas de la figure 2 à la poulie motorisée 3.

Les cinq poulies P1 à P5 forment un chemin de halage en zigzag et procurent un enroulement de la ligne sur une grande portion de la périphérie desdits poulies correspondant à deux fois la circonférence de l'une de ces poulies. Les poulies P1, P2, P3 forment un premier jeu disposé en triangle en aval de la poulie motorisée 3, et les deux dernières poulies P4 et P5 sont superposées et elles forment un second jeu sur lequel s'applique une bande sans fin 30 détaillée ci-après.

La longueur du chemin de halage permet de mieux répartir les contraintes liées à la détente de la ligne entre la poulie motorisée 3 et la dernière poulie P4 ou P5.

La ligne 5 est appliquée sur les deux dernières poulies P4 et P5 au moyen de la bande sans fin 30. Cette bande sans fin est également motorisée, elle est en fait entraînée par la courroie 7 comme détaillé plus loin en liaison avec la figure 6. Cette bande sans fin 30 circule à partir de sa poulie motrice 31 en allant vers la poulie P4 puis la poulie P5. Elle circule sur une poulie folle 32 qui maintient une certaine tension au niveau de cette bande sans fin. Cette poulie 31 est située au-dessus de la poulie P3, sensiblement au même niveau que la poulie complémentaire P4. La poulie 32 est située à la partie supérieure du bâti et elle est montée sur un bras 33 qui est articulé sur le bâti 1, lequel bras 33 est soumis à un dispositif de rappel élastique constitué d'un ressort 34 qui apparaît figure 6.

La bande sans fin 30 circule aussi sur une poulie folle de guidage 35 située à l'extrémité arrière supérieure du bâti 1, et sur une poulie folle d'extrémité 36 qui se situe au niveau de la poulie complémentaire P5.

La poulie d'extrémité 36 est portée par un bras 37, lequel bras est articulé sur le bâti 1 autour d'un axe 38 qui sert aussi d'axe à la poulie 35.

Ce bras 37 est soumis lui aussi à un organe de rappel élastique en forme de ressort 39, lequel ressort tend à appliquer la poulie d'extrémité 36 sur la dernière poulie complémentaire P5.

Cette bande sans fin 30 circule à une vitesse qui correspond au moins à la vitesse périphérique des poulies complémentaires P4 et P5. Elle applique la ligne 5 sur ces poulies P4 et P5 et, en même temps, elle permet d'absorber plus facilement les noeuds et autres qui peuvent être disposés sur ladite ligne 5.

La courroie 7 d'entraînement des différentes poulies complémentaires motrices est une courroie plate qui est elle-même entraînée positivement c'est-à-dire sans patinage, par la poulie motrice 3. Elle est serrée sur la poulie motrice au moyen d'une multitude de galets montés à la façon d'une chaîne de bicyclette 40 dont une extrémité est fixée au bâti 1 et dont l'autre extrémité est maintenue en tension au moyen d'un organe élastique du genre ressort 41.

La courroie 7 est encore tendue au moyen d'un galet tendeur 42 disposé à proximité de la poulie motrice 3. Ce tendeur 42 est détaillé plus loin en liaison avec la figure11.

Pour ne pas surcharger la figure 4, le dispositif amortisseur représenté figure 3 a simplement été esquissé par la représentation de la poulie 19. Ce dispositif amortisseur ou scion, installé sur le vireur de la figure 2, joue le même rôle que dans le cas de la figure 1.

La figure 6 montre la vue arrière du dispositif de halage représenté figure 4 et en particulier le moteur hydraulique 4 qui entraîne la poulie motrice 3 et dans le même temps, au moyen de la courroie 7, les différents galets d'entraînement qui sont associés aux poulies complémentaires motrices.

La courroie 7 entraîne le galet G5 qui correspond à la dernière poulie complémentaire P5. Cette courroie 7 circule ensuite autour du galet G3 qui réalise l'entraînement de la poulie P3 et ensuite autour du galet G4 qui réalise l'entraînement de la poulie complémentaire P4. Elle circule ensuite sur le galet 31' associé à la poulie 31, pour entraîner la bande sans fin 30. La courroie 7 s'enroule ensuite autour du galet G2 situé à la partie supérieure du bâti avant de redescendre autour du galet G1 qui entraîne la poulie P1 et ensuite elle s'enroule autour de la poulie motrice 3.

Pour obtenir au niveau des dernières poulies complémentaires motrices P4 et P5 une vitesse périphérique surmultipliée, supérieure à celle de la poulie motrice 3, les galets correspondants, G4 et G5, ont un diamètre qui est légèrement inférieur à celui des poulies P4, P5, respectivement. Ces galets d'entraînement G4 et G5 permettent, grâce à cette vitesse surmultipliée, de maintenir une force de traction sur la ligne de pêche et ainsi d'absorber le mou éventuel.

La figure 7 représente une coupe des galets G4 et G5 montrant principalement la surface périphérique de ces galets. Ces galets sont aménagés de façon à permettre un glissement de la courroie d'entraînement 7 sur leur surface périphérique. La périphérie de ces galets G4 et G5, comporte une portion centrale cylindrique 45 de faible largeur correspondant sensiblement à 1/5 de la largeur totale des galets. Cette bande centrale est bordée par des surfaces tronconiques 46 dont l'angle au sommet est de l'ordre de 4 à 10°.

On obtient ainsi des galets dont la surface périphérique présente un bombé propice au centrage de la courroie 7 et la surface de contact entre cette courroie 7 et la périphérie de ces galets G4 et G5 est suffisamment faible pour favoriser le patinage.

Les autres galets G1, G2 et G3 ont également une surface périphérique bombée. La partie centrale 47 de cette surface périphérique est cylindrique avec une largeur correspondant sensiblement au tiers de la largeur des galets, laquelle partie centrale 47 est bordée par des surfaces tronconiques 48 dont l'angle au sommet est de l'ordre de 1 à 4°.

Le diamètre de la portion cylindrique centrale 47 des galets G1, G2 et G3 est identique au diamètre des poulies complémentaires motrices P1, P2, P3, associées auxdits galets, respectivement.

La vitesse périphérique de ces poulies complémentaires P1, P2 et P3, est identique à la vitesse périphérique de la poulie motrice 3 ce qui permet une véritable détente en cascade au niveau du chemin de halage, de la ligne 5.

Le bâti 1 du dispositif de halage est représenté figure 5 seul. Ce bâti est réalisé en un matériau qui permet le moulage. En l'examinant en liaison avec la figure 9, on remarque que ce bâti comporte plusieurs compartiments : - un compartiment 50 pour loger la poulie motrice 3 et, de part et d'autre d'une cloison 51, - un compartiment en forme de carter 52 dans lequel on trouve les différents galets moteurs et - un compartiment 53 sur la partie frontale du dispositif, au niveau duquel on trouve toutes les poulies complémentaires motrices. On remarque, figure 9, que la poulie motrice 3 a une largeur qui lui permet de se positionner d'un côté, en face du compartiment 52 et des différents galets et de l'autre côté, en face du compartiment 53 et des différentes poulies complémentaires motrices.

Le bâti 1 comporte un fond 54 au niveau du compartiment 50 dans lequel on trouve le bossage creux 55 qui sert de logement et de support au moteur hydraulique 4. Le bossage se loge dans le creux de la poulie motrice 3 qui est en forme de cloche. Le fond 54 et la cloison 51 sont reliés par une paroi transversale 56 qui comporte à sa partie inférieure une fenêtre 57 permettant le passage des deux brins de la courroie d'entraînement 7.

Une paroi supérieure 60 rigidifie et réunit à la fois le fond 54, la paroi 56 et la cloison 51. Cette paroi supérieure 60 se prolonge à l'avant sous la forme d'une paroi 61, et à l'arrière sous la forme d'une paroi 62 qui est verticale et le dessous du bâti comporte une paroi 63 qui s'étend de la paroi avant 61 à la paroi arrière 62.

Le bâti 1 comporte également un fourreau 64, sur l'arrière du fond 54, qui permet de loger le mât 10. Le bâti 1 est de préférence monté pivotant par rapport au mât 10.

La cloison 51 comporte, obtenus directement par moulage, les moyeux des axes des poulies complémentaires motrices. Ces moyeux 66, comme représenté figure 9, sont traversés par des axes 67 qui s'étendent entre les poulies complémentaires motrices comme par exemple la poulie P1, et son galet d'entraînement 61. Ces axes 67 peuvent par exemple tourner dans leur moyeu 66, sans autre lubrification que la lubrification par l'eau de mer qui est véhiculée par la ligne 5 et la courroie 20.

La figure 9 montre également un dispositif 70 servant au guidage de la ligne 5. Ce dispositif 70 est également représenté figure 10 ; il est constitué d'une couronne 71 qui entoure l'extrémité frontale de la poulie de halage 3, c'est-à-dire sa bordure, du côté du chemin de halage. Cette couronne 71 est solidaire du bâti par tout moyen approprié et elle permet de maintenir la ligne sur la poulie 3 quels que soient les mouvements du bateau. Elle comporte une encoche centripète 72, située du côté de l'arrivée de la ligne 5, laquelle encoche fait office de guide, obligeant la ligne 5 à se maintenir sur la poulie motrice 3.

Cette encoche est réalisée au niveau de la partie amont de la poulie motrice 3. Son entrée est inclinée vers le bas, orientée vers la surface de l'eau ; elle est en forme d'entonnoir et la sortie est disposée dans un alignement tangent au chemin de halage sur la poulie motrice.

Le dispositif de guidage 70 est par exemple fixé au bâti 1 au moyen d'une poutre 73 qui est disposée dans la partie inférieure avant dudit bâti, sous la poulie motrice 3.

Ce dispositif de guidage 70 permet aussi à l'opérateur de séparer plus facilement les avançons qui portent les poissons, par rapport à la ligne mère qui suit le chemin de halage. Ces avançons non représentés, sont également guidés à la suite du dispositif 70, au moyen d'un rail 75 qui se situe en abord et sous les poulies complémentaires de façon à maintenir lesdits avançons en dehors de l'encombrement de ces différentes poulies évitant ainsi tous risques de remontée intempestive des avançons autour desdites poulies.

Ce rail 75 servant au guidage est représenté sur le schéma figure 9. Il est fixé par tous moyens appropriés au bâti 1.

Le dispositif de guidage 75 peut être installé de la même façon, dans le mode de réalisation de la figure 2, sur la poulie d'entrée P4.

La figure 11 montre, d'une façon un peu plus détaillée, le tendeur 42 qui agit sur le brin retour de la courroie d'entraînement 7. Ce tendeur 42 est monté par exemple dans une chape 80, laquelle chape est fixée sur la paroi 56 du bâti 1.

La poulie 42 exerce une pression sur le brin mou de la courroie 7 au moyen d'un organe élastique 81 par exemple. Dans le cas du mode de réalisation de la figure 2, cette tension peut être effectuée par le réglage de la position de la poulie ou galet de renvoi 8.

On remarque aussi sur la figure 11, le ressort 41 qui permet de tendre la chaîne 40 munie de galets, laquelle chaîne permet d'appliquer la courroie 7 sur la poulie motrice 3.

## Revendications

1. Dispositif de halage d'une ligne de pêche (5), couramment dénommé vireur, utilisé pour remonter ladite ligne de pêche dans le bateau équipé, en particulier pour récupérer les poissons péchés, lequel dispositif comprend une poulie motorisée (3) de halage, portée par un bâti (1), **caractérisé en ce qu'**il comporte en plus au moins deux poulies complémentaires de halage de la ligne et des moyens d'entraînement desdites poulies complémentaires qui sont tels qu'ils permettent d'adapter la vitesse périphérique entre la première et la dernière desdites poulies complémentaires, selon la situation de tension de ladite ligne (5), l'ensemble desdites poulies complémentaires étant disposé de façon à agir comme un cabestan, c'est-à-dire que la somme des portions de lignes en contact avec les poulies est au moins égale à la circonférence de l'une de ces poulies.

2. Dispositif de halage selon la revendication 1, **caractérisé en ce que** les moyens d'entraïnement des poulies complémentaires de halage, sont constitués de galets associés auxdites poulies et d'une courroie plate (7) qui est entraînée par la poulie motorisée de halage (3) et qui coopère avec lesdits galets, laquelle courroie plate est telle qu'elle offre une capacité de patinage ou de glissement, adaptée aux besoins et en particulier à l'état de tension au niveau de la ligne de pêche.

3. Dispositif de halage selon la revendication 2, **caractérisé en ce que** au moins ta poulie complémentaire de traction qui est la plus éloignée de la poulie motorisée. (3), est associée à un galet dont le diamètre est tel qu'il lui procure une vitesse périphérique à vide, qui est supérieure à la vitesse périphérique de la poulie motorisée (3).

4. Dispositif de halage selon l'une quelconque des revendications 1 à 3, **caractérisé en ce qu'**il comporte des moyens (9) motorisés ou non, susceptibles d'appliquer et de presser la ligne (5) sur au moins la dernière poulie de halage.

5. Dispositif de halage selon l'une quelconque des revendications 1 à 4, **caractérisé en ce qu'**il comporte d'une part, un dispositif de guidage (70) pour la ligne de pêche, lequel dispositif, en forme de couronne (71), est disposé autour du rebord périphérique frontal de la première poulie de halage, de façon à assurer le maintien de la ligne mère sur le chemin de halage de ladite poulie motrice (3), lequel dispositif (70) comporte, en plus, une entaille ou encoche centripète (72) qui canalise ladite ligne sur le chemin de halage tout en permettant à l'opérateur de dégager en toute sécurité, les avançons par rapport audit chemin de halage, et **en ce qu'**il comporte, d'autre part, un guide en forme de rail (75) situé en abord et sous les poulies, évitant toute remontée intempestive des avançons fixés sur la ligne (5) vers lesdites poulies.

6. Dispositif de halage selon l'une quelconque des revendications 1 à 5, **caractérise en ce qu'**il comporte, un dispositif faisant office d'amortisseur pour l'entrée de la ligne, lequel dispositif comprend une poulie fixe (9) disposée à l'extrémité amont du bâti et une poulie mobile (10) située entre ladite poulie (9) et la première poulie de traction, laquelle poulie mobile (10) est portée par un bras (11) qui la maintient en position de façon élastique, au moyen d'un ressort (14) par exemple.

7. Dispositif de halage selon l'une quelconque des revendications 1 à 6, **caractérisé en ce que** le bâti (1) se présente sous une forme monobloc comprenant un compartiment (50) pour loger la poulie motrice (3) et deux compartiments (52, 53), séparés par une cloison (51) laquelle cloison définit un compartiment arrière (52) en forme de carter pour loger les moyens d'entraînement des poulies complémentaires de traction et un compartiment avant (53) du côté du chemin de halage, où se situent lesdites poulies complémentaires de traction, ladite poulie motrice (3) ayant une largeur telle qu'elle se situe en face des deux compartiments (52 et 53), offrant une portion de sa surface périphérique pour le halage de la ligne et une portion pour la courroie (20) qui réalise l'entraînement desdites poulies complémentaires.

8. Dispositif de halage selon la revendication 7, **caractérisé en ce que** la poulie motrice (3) se présente sous la forme d'une cloche, coiffant un bossage creux (55) aménagé sur la paroi (54) du compartiment (50), lequel bossage (55) ayant des dimensions suffisantes pour loger et fixer le moteur (4) qui réalise l'entraînement de ladite poulie motrice (3).

9. Dispositif de halage selon l'une quelconque des revendications 7 ou 8, **caractérisé en ce qu'**il comporte par exemple, au mains quatre poulies complémentaires de halage qui sont réparties sur la cloison (51) de façon à former un chemin de halage en zigzag avec un coefficient d'enroulement de la ligne sur lesdites poulies complémentaires, de l'ordre de deux tours au total.

10. Dispositif de halage selon la revendication 9, **caractérisé en ce qu'**il comporte des moyens en forme de chaîne (40) munie de galets, disposés de façon à appliquer la courroie (7) qui sert à entraîner les poulies complémentaires de traction, sur la périphérie de la poulie motrice (3).

## Patentansprüche

1. Vorrichtung zum Einholen einer Angelleine (5), üblicherweise Leinenspill genannt, das verwendet wird, um die Angelleine in das bemannte Boot einzuholen, insbesondere um die gefangenen Fische aufzuholen, wobei die Vorrichtung eine motorisierte Rolle (3) zum Einholen umfasst, die von einem Rahmen (1) getragen wird, **dadurch gekennzeichnet, dass** sie ferner mindestens zwei zusätzliche Rollen zum Einholen der Leine und Antriebsmittel für die zusätzlichen Rollen umfasst, die derart ausgeführt sind, dass sie es ermöglichen, die Umfangsgeschwindigkeit zwischen der ersten und der letzten der zusätzlichen Rollen je nach der Spannungssituation der Leine (5) anzupassen, wobei die Gesamtheit der zusätzlichen Rollen derart angeordnet ist, dass sie als Spill wirkt, d.h. dass die Summe der Leinenabschnitte, die mit den Rollen in Kontakt sind, mindestens gleich dem Umfang einer dieser Rollen ist.

2. Einholvorrichtung nach Anspruch 1, **dadurch gekennzeichnet, dass** die Antriebsmittel für die zusätzlichen Rollen aus mit den Rollen verbundenen Walzen und einem flachen Riemen (7) gebildet sind, der von der motorisierten Einholrolle (3) angetrieben wird und mit den Walzen zusammenwirkt, wobei dieser flache Riemen derart dosgeführt ist, dass et eine Rulsch- oder Gleitfähigkeit bietet, die an die Bedürfnisse und insbesondere an den Spannungszustand im Bereich der Angelleine angepasst ist.

3. Enholvorrichtung nach Anspruch 2, **dadurch gekennzeichnet, dass** mindestens die zusätzliche Zugrolle, die die am weitesten von der motorisierten Rolle (3) entfernte Rolle ist, mit einer Walze verbunden ist, deren Durchmesser derart ist, dass er ihr eine Umfangsgeschwindigkeit im Leerzustand verleiht, die gröber als die Umfangsgeschwindigkeit der motorisierten Rolle (3) ist.

4. Einholvorrichtung nach einem der Ansprüche 1 bis 3, **dadurch gekennzeichnet, dass** sie motorisierte oder nicht motorisierte Mittel (9) umfasst, die die Leine (5) auf mindestens die letzte Enholrolle anlegen und anpressen können.

5. Einholvorrichtung nach einem der Ansprüche 1 bis 4, **dadurch gekennzeichnet, dass** sie einerseits eine Führungsvorrichtung (70) für die Angelleine umfasst, wobei die Vorrichtung in Kranzform (71) um den vorderen Umfangsrand der ersten Einholrolle angeordnet ist, um den Halt der Hauptleine auf dem Einholweg der Antriebsrolle (3) zu gewährleisten, wobei die Vorrichtung (70) ferner eine Einkerbung oder zentripetale Kerbe (72) umfasst, die die Leine auf den Einholweg lenkt und es dem Bediener gleichzeitig ermöglicht, in aller Sicherheit die Vorföcher in Bezug zum Enholweg zu lösen, und dass sie andererseits eine Führung in Form einer Schiene (75) umfasst, die sich in Nähe der und unter den Rollen befindet und jedes ungewollte Einholen der an der Leine (5) befestigten Vorföcher zu den Rollen vermeidet.

6. Einholvorrichtung nach einem der Ansprüche 1 bis 5, **dadurch gekennzeichnet, dass** sie eine Vorrichtung umfasst, die als Dämpfer für den Eintritt der Leine dient, wobei die Vorrichtung eine feste Rolle (9), die am stromaufwärtigen Ende des Rahmens angeordnet ist, und eine bewegliche Rolle (10), die zwischen der Rolle (9) und der ersten Zugrolle angeordnet ist, umfasst, wobei die bewegliche Rolle (10) von einem Arm (11) getragen wird, der sie beispielsweise mit Hilfe einer Feder (14) elastisch in Position hält.

7. Einholvorrichtung nach einem der Ansprüche 1 bis 6, **dadurch gekennzeichnet, dass** der Rahmen (1) in einstückiger Form vorhanden ist, umfassend eine Abteilung (50) zur Unterbringung der Antriebsrolle (3) und zwei Abteilungen (52, 53), die durch eine Trennwand (51) getrennt sind, wobei die Trennwand eine hintere Abteilung (52) in Gehäuseform zur Unterbringung der Antriebsmittel für die zusätzlichen Zugrollen und eine vordere Abteilung (53) auf der Seite des EinhoMregs definiert, in der sich die zusätzlichen Zugrollen befinden, wobei die Antriebsrolle (3) eine derartige Breite hat, dass sie sich gegenüber den beiden Abteilungen (52 und 53) befindet und einen Abschnitt ihrer Umfangsfläche für das Einholen der Leine und einen Abschnitt für den Kranz (20) bietet, der den Antrieb der zusätzlichen Rollen gewährleistet.

8. Einholvorrichtung nach Anspruch 7, **dadurch gekennzeichnet, dass** die Antriebsrolle (3) in Form einer Glocke vorhanden ist, die einen hohlen Buckel (55) bietet, der auf der Wand (54) der Abteilung (50) angeordnet ist, wobei der Buckel (55) ausreichende Abmessungen hot, um den Motor (4) unterzubringen und zu befestigen, der den Antrieb der Antriebsrolle (3) verwirkficht.

9. Einholvorrichtung noch einem der Ansprüche 7 oder 8, **dadurch gekennzeichnet, dass** sie beispielsweise mindestens vier zusätzliche Enholrollen umfasst, die auf der Trennwand (51) derart verteilt sind, dass sie einen Einholweg in Zickzack-Form mit einem wickelkoeffizienten der Leine auf die zusätzlichen Rollen von insgesamt ungefähr zwei Umdrehungen bilden.

10. Einholvonichtung nach Anspruch 9, **dadurch gekennzeichnet, dass** sie Mittel in Kettenform (40) umfosst, die mit Walzen versehen und derart angeordnet sind, dass sie den Riemen (7), der dazu dient, die zusätzlichen Zugrollen anzutreiben, an den Umfang der Antriebsrolle (3) anlegen.

## Claims

1. A device for hauling a fishing line (5) currently designated as turning gear, used for winching said fishing line back to the boat fitted, in particular for collecting fishes caught, which device includes a motorised hauling pulley (3), carried by a frame (1), **characterised in that** it comprises moreover at least two additional line hauling pulleys and means for driving said additional pulleys which are capable of adapting the peripheral speed between the first and the last of said additional pulleys, according to the tension situation of said line (5), the set of said additional pulleys being arranged so as to act as a capstan, i.e. the sum of the portions of lines in contact with the pulleys is at least equal to the circumference of one of said pulleys.

2. A hauling device according to claim 1, **characterised in that** the means for driving the additional hauling pulleys, are formed of rollers associated with said pulleys and of a flat belt (7) which is driven by the motorised hauling pulley (3) and which co-operates with said rollers, which flat belt is such that it offers a skidding or slipping capacity, suited to the needs and in particular the tension state of the fishing line.

3. A hauling device according to claim 2, **characterised in that** at least the additional traction pulley which is the furthermost from the motorised pulley, (3), is associated with a roller whose diameter is such it provides peripheral off-load speed thereto, which is greater than the peripheral speed of the motorised pulley (3).

4. A hauling device according to any one of claims 1 to 3, **characterised in that** it comprises means (9), motorised or not, liable to apply and to press the line (5) against at least the last hauling pulley.

5. A hauling device according to any one of claims 1 to 4, **characterised in that** it comprises on the one hand, a guiding device (70) for the fishing line, which device, in the form of a crown (71) is arranged around the front peripheral rim of the first hauling pulley, for holding the master line on the hauling pathway of said motorised pulley (3), which device (70) comprises moreover, a centripetal notch or hollow (72) which channels said line on the hauling pathway while enabling the operator to clear in complete safety, the branches with respect to said hauling pathway, and **in that** it comprises on the other hand, a guide in the form of a rail (75) situated at the front and under the pulleys, preventing any undesirable return of the branches attached to the line (5) towards said pulleys.

6. A hauling device according to any one of claims 1 to 5, **characterised in that** it comprises, a device acting as a shock-absorber when the line is being wound back, which device comprises a fixed pulley (9) arranged at the upstream end of the frame and a mobile pulley (10) situated between said pulley (9) and the first traction pulley, said mobile pulley (10) is carried by an arm (11) holding it in position resiliently, by means of a spring (14) for example.

7. A hauling device according to any one of claims 1 to 6, **characterised in that** the frame (1) is in the form of a single block including a compartment (50) for housing the motorised pulley (3) and two compartments (52, 53), separated by a wall (51) which wall defines a rear compartment (52) in the form of a casing for housing the means for driving the additional traction pulleys and a front compartment (53) on the hauling pathway side, where said additional traction pulleys are situated, said motorised pulley (3) having such a thickness that it is situated opposite both compartments (52 and 53), offering a portion of its peripheral surface for hauling the line and a portion for the belt (20) making the driving of said additional pulleys.

8. A hauling device according to claim 7, **characterised in that** the motorised pulley (3) is in the form of a bell, capping a hollow emboss (55) provided on the wall (54) of the compartment (50), which emboss (55) having sufficient dimensions for housing and attaching the motor (4) driving said motorised pulley (3).

9. A hauling device according to any one of claims 7 or 8, **characterised in that** it comprises for example, at least four additional hauling pulleys which are distributed on the wall (51) so as to form a zigzag hauling pathway with a winding coefficient of the line onto said additional pulleys, of the order to two turns in total.

10. A hauling device according to claim 9, **characterised in that** it comprises means in the form of a chain (40) fitted with rollers, arranged in order to apply the belt (7) used for driving the additional tension pulleys, to the periphery of the motorised pulley (3).
